(19) Europäisches Patentamt / European Patent Office / Office européen des brevets

(11) **EP 2 815 624 B1**

(12) **FASCICULE DE BREVET EUROPEEN**

(45) Date de publication et mention
de la délivrance du brevet:
**06.04.2016 Bulletin 2016/14**

(21) Numéro de dépôt: **13704607.4**

(22) Date de dépôt: **14.02.2013**

(51) Int Cl.:
*H04W 84/18* (2009.01)   *H04W 72/04* (2009.01)
*H04W 72/10* (2009.01)

(86) Numéro de dépôt international:
**PCT/EP2013/053028**

(87) Numéro de publication internationale:
**WO 2013/120975 (22.08.2013 Gazette 2013/34)**

(54) **ALLOCATION DE RESSOURCES**

RESSOURCEN-ZUORDNUNG

RESOURCE ALLOCATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.02.2012 FR 1200441**

(43) Date de publication de la demande:
**24.12.2014 Bulletin 2014/52**

(73) Titulaire: **THALES**
**92200 Neuilly-sur-Seine (FR)**

(72) Inventeurs:
• **THILL, Jean-Claude**
  **F-92704 Colombes Cedex (FR)**
• **VERHARGHE, Fabien**
  **F-92704 Colombes Cedex (FR)**
• **HERBIN, Isabelle**
  **F-92704 Colombes Cedex (FR)**
• **MASSIN, Raphael**
  **F-92704 Colombes Cedex (FR)**
• **MONZAT DE SAINT JULIEN, Gilles**
  **F-92704 Colombes Cedex (FR)**
• **LAMY-BERGOT, Catherine**
  **F-92704 Colombes Cedex (FR)**

(74) Mandataire: **Priori, Enrico**
**Marks & Clerk France**
**Conseils en Propriété Industrielle**
**Immeuble «Visium»**
**22, avenue Aristide Briand**
**94117 Arcueil Cedex (FR)**

(56) Documents cités:
**US-A1- 2010 074 133**

• **FABIEN ESMIOL ET AL: "Distributed Multi-Level
Cooperative Scheme for QoS Support in Public
Safety Networks", MOBILE ADHOC AND
SENSOR SYSTEMS (MASS), 2011 IEEE 8TH
INTERNATIONAL CONFERENCE ON, IEEE, 17
octobre 2011 (2011-10-17), pages 955-961,
XP032021963, DOI: 10.1109/MASS.2011.116
ISBN: 978-1-4577-1345-3**
• **CHUNHUNG RICHARD LIN ET AL: "Adaptive
Clustering for Mobile Wireless Networks", IEEE
JOURNAL ON SELECTED AREAS IN
COMMUNICATIONS, IEEE SERVICE CENTER,
PISCATAWAY, US, vol. 15, no. 7, 1 septembre
1997 (1997-09-01), XP011054691, ISSN:
0733-8716**

**Description**

La présente invention concerne le domaine des réseaux de communications mobiles et maillés, par exemple les réseaux ad-hoc mobiles. De tels réseaux comportent une pluralité d'émetteurs/récepteurs radios interconnectés entre eux par le biais de liaisons radios. Ces émetteurs/récepteurs radios sont par exemple un terminal informatique équipé d'une liaison wifi, un téléphone portable ou tout autre dispositif de communication sans fil, mais ils peuvent aussi être un véhicule mobile embarquant un dispositif de communication sans fil. Ces émetteurs/récepteurs radios sont également connus sous le nom de noeuds dans l'état de la technique.

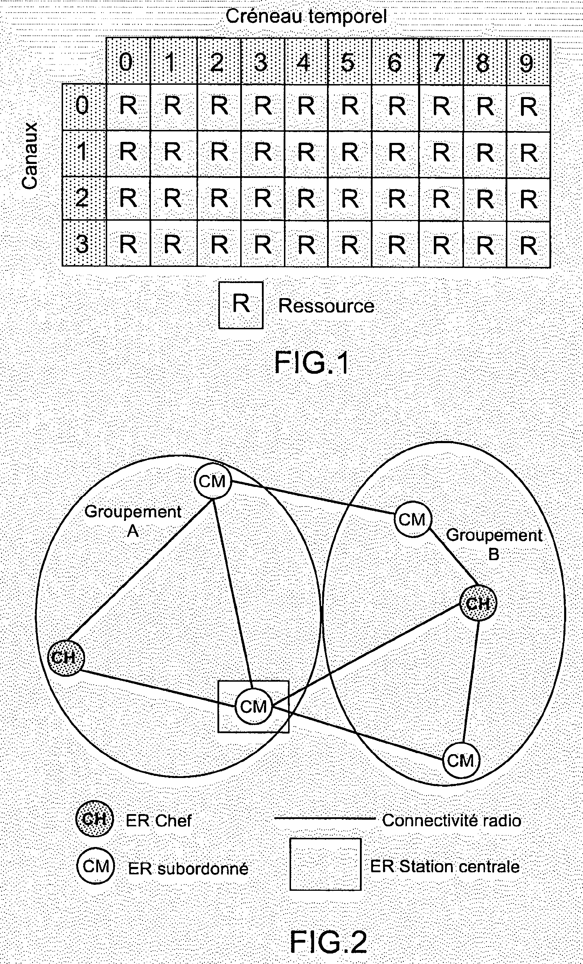

L'invention concerne plus précisément l'allocation de ressources, une ressource étant définie par un créneau temporel, également connu sous l'expression slot, et au moins un canal associé, ledit canal étant au moins une fréquence d'émission réception permettant une ou des communications dans le réseau mobile. Un exemple de ces ressources est présentée figure 1. L'allocation des ressources est réalisée en particulier en utilisant un accès multiple au medium de transmission par répartition dans le temps (connu en anglais sous l'expression « Time Division Multiple Access » ou TDMA) ou en fréquence (connu en anglais sous l'expression « Frequency Division Multiple Access » ou FDMA).

Le réseau de communication mobile et maillé comporte des émetteurs/récepteurs radios répartis dans différents groupements, dans l'état de la technique ces groupements sont aussi connus sous le nom de grappe ou sous le nom anglais de cluster. Un exemple d'un réseau radio mobile est présenté figure 2. Chaque groupement possède un émetteur/récepteur chef du groupement, et un des émetteurs/récepteurs est défini comme étant l'émetteur/récepteur central du réseau. Les groupements sont définis en respectant les règles suivantes :

-    Chaque émetteur/récepteur radio est soit émetteur/récepteur chef du groupement (CH) soit émetteur/récepteur subordonné du groupement (CM).
-    Les émetteurs/récepteurs subordonnés sont tous en portée radio de leur émetteur/récepteur chef (CH).
-    Chaque émetteur/récepteur radio n'appartient qu'à un seul groupement
-    Les émetteurs/récepteurs chefs (CH) ne sont pas voisins radio.
-    L'émetteur/récepteur radio central peut être n'importe lequel des émetteurs/récepteurs radio.

Deux émetteurs/récepteurs sont en voisinage s'ils sont en portée radio.

Deux groupements A et B sont dits voisins si au moins un émetteur récepteur de l'un est en voisinage avec un émetteur récepteur de l'autre.

Deux groupements A et B sont en voisinage fort si au moins une des conditions suivantes est vérifiée :

-    Ils sont voisins
-    Il existe au moins un émetteur récepteur radio du groupement A et un émetteur récepteur radio du groupement B qui ont un voisin commun dans un autre groupement.

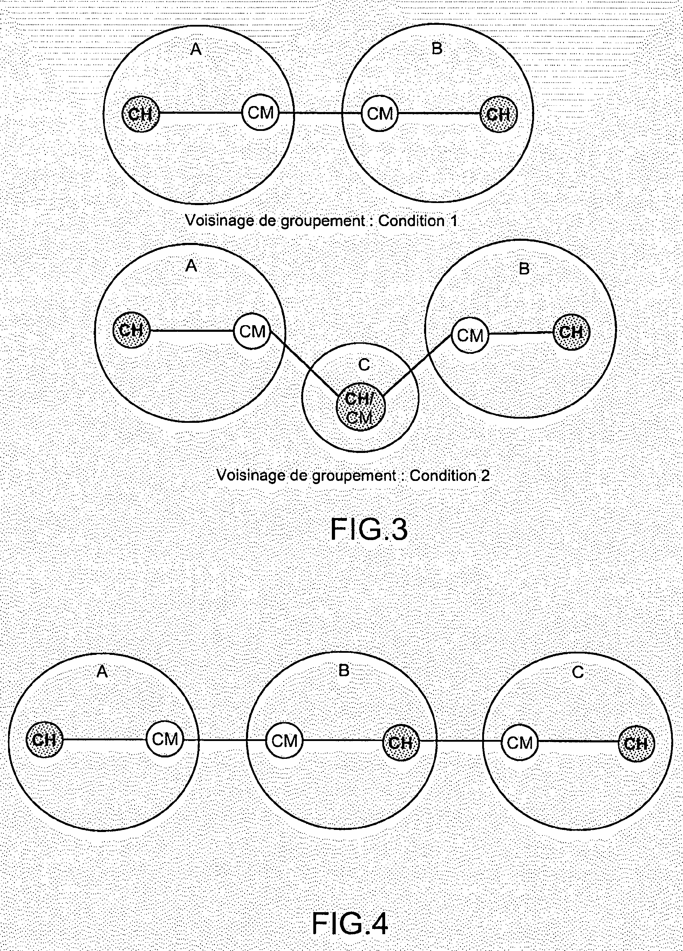

Un exemple de ces différentes conditions est présenté figure 3. La figure 4 présente une situation dans laquelle les groupements A et C ne sont pas en voisinage.

Des dispositifs de détermination des différents groupements, des émetteurs/récepteurs chef de groupement et de l'émetteur/récepteur central du réseau sont décrits dans l'état de la technique par exemple dans les documents suivants :

-    La récommandation IETF RFC numéro 3626 sur OLSR qui est l'acronyme anglais de Optimized Link State Routing Protocol rédigée par T. Clausen et P. Jacquet
-    l'article de M. Gerla et J. T.-C. Tsai ayant pour titre Mutlicluster, mobile, multimedia radio network, publié dans « Journal of Wireless Networks , 1(3) : 255-265, July 1995 »
-    l'article de Chiang, H. WU, W. Liu et M. Gerla ayant pour titre Routing in clustered multihop, mobile wireless networks with fading channel, publiés durant la conférence ICCS/ISPACS'96 ayant eu lieu à Singapore en novembre 1996
-    l'article de Fabien Esmiol et al. « Distributed Multi-Level Coopérative Scheme for QoS Support in Public Safety Networks » XP032021963.

Le but de l'invention est donc d'attribuer des ressources dynamiquement aux émetteurs/récepteurs radio de façon à assurer la transmission de ces émetteurs/récepteurs radio vers un ou plusieurs des émetteurs/récepteurs radios voisins, en évitant les conflits d'attribution (par exemple résultant du fait qu'un émetteur/récepteur radio ne peut transmettre et recevoir simultanément). Le but de l'invention est aussi d'éviter les interférences entre les émetteurs/récepteurs radios. Cette allocation demande donc une coordination complexe entre les émetteurs/récepteurs radios. Cette allocation peut aussi dépendre du besoin en communication des différents émetteurs/récepteurs radios. Pour répondre à l'évolution de l'organisation des groupements et des besoins de ressources des émetteurs/récepteurs radios, il est nécessaire d'avoir un système permettant de modifier les allocations de manière continue.

Il est connu, dans l'état de la technique, une solution dans laquelle le réseau de communication mobile n'est pas organisé en un ensemble de groupements. L'allocation dépend du type de transmission considérée : transmission de type broadcast vers tous les émetteurs/récepteurs radios voisins, transmission de type point à point (d'un émetteur/récepteur radio vers un émetteur/récepteur radio voisin) et de façon plus générale, d'un émetteur/récepteur radio vers tout ou partie des émetteurs/récepteurs radios voisins. L'allocation pour éviter les conflits doit prendre en compte un certain nombre de règles par exemple ne pas allouer un même créneau temporel à des transmissions différentes qui impliquent des émetteurs/récepteurs radios communs. Une autre règle est de ne pas allouer des transmissions sur le même canal d'un créneau temporel, si cela implique une interférence. Ce type de négociation en distribué est lent. Or la quantité de ressources à attribuer dépend du besoin en trafic de l'émetteur/récepteur radio, donc si la réactivité est faible, il peut arriver des situations dans lesquelles les ressources allouées à un émetteur/récepteur radio peuvent être insuffisantes alors que celles allouées à un autre émetteur/récepteur radio sont en excès.

Il est également connu des systèmes permettant l'allocation de ressources dans un réseau de communication mobile, mais uniquement entre des émetteurs/récepteurs radios d'un même groupement. L'allocation des ressources utilisées pour les communications entre des émetteurs/récepteurs radios appartenant à deux groupements différents est effectuée en utilisant un accès multiple par répartition de code (connu en anglais sous l'expression Code Division Multiple Access ou CDMA). Cependant ce type d'allocation des ressources dans le cadre d'un réseau de communication maillé mobile n'est pas efficace, en effet les interférences dû à l'effet prés/loin ne sont pas supprimables dans ce type de réseau.

Une autre solution connue de l'état de la technique est d'utiliser un système d'allocation de ressources équivalent à celui utilisé dans un réseau cellulaire. Dans ce cas il est considéré que les points d'accès sont les émetteurs/récepteurs chefs de groupement et les usagers sont les émetteurs/récepteurs radios. Cependant dans ces systèmes seules sont prises en compte les transmissions d'un émetteur/récepteur radio vers le point d'accès (émetteur/récepteur chef de groupement). Ces systèmes ne permettent pas l'allocation de ressources pour des transmissions directes entre un émetteur/récepteur radio et un ou des émetteurs/récepteurs radios voisins. De plus, les allocations de ressources pour les transmissions entre des émetteurs/récepteurs radios appartenant à des groupements différentes ou les communications entre deux émetteurs/récepteurs chefs ne sont pas réalisables par ces systèmes. En effet dans les réseaux cellulaires, les communications entre des émetteurs/récepteurs de groupements différents passent par un réseau d'interconnexion indépendant des points d'accès (émetteurs/récepteurs chef de groupement) et il n'est donc pas nécessaire d'effectuer d'allocation de ressources. Dans le cas d'utilisation de petits points d'accès connus sous le nom de femtocells, il est connu des systèmes d'allocation de ressources entre ces points d'accès, cependant ce type d'allocation ne permet pas l'allocation de ressources pour la communication directe entre deux émetteurs/récepteurs.

La présente invention vise notamment à remédier à ces problèmes en proposant un système et un procédé d'allocation de ressources dans un réseau de communications mobiles et maillés, permettant une allocation des ressources servant aux communications entre des émetteurs/récepteurs radios appartenant à des groupements différents et minimisant les échanges, nécessaires à l'allocation de ces ressources, entre les différents émetteurs/récepteurs radio du réseau de communications mobiles et maillés.

Il est proposé, selon un aspect de l'invention un système d'allocation de ressources de communications, une ressource comprenant un créneau temporel et au moins un canal associé, ledit canal comprenant au moins une fréquence d'émission et/ou de réception utilisable durant ledit créneau temporel, dans un réseau maillé mobile comprenant un premier ensemble d'émetteurs/récepteurs radios communiquant entre eux par l'intermédiaire de liaisons radios, au moins un groupement, comportant un deuxième ensemble d'au moins un émetteur/récepteur radio dudit premier ensemble, ledit deuxième ensemble comprenant un émetteur/récepteur chef dans une relation chef subordonnés avec l'ensemble des émetteurs/récepteurs radio du deuxième ensemble. Ledit réseau maillé mobile comprenant aussi un émetteur/récepteur radio central du réseau appartenant audit premier ensemble. Ledit système étant caractérisé en ce qu'il comporte des premiers moyens de détermination dudit ou desdits groupement, des deuxièmes moyens d'allocation de tout ou partie desdites ressources par affectation d'une ressource à un unique groupement pouvant utiliser ladite ressource pour une ou des communications entre des émetteurs/récepteurs radios dudit groupement ; ou par affectation d'une ressource à un unique premier groupement pouvant utiliser ladite ressource pour la communication entre des émetteurs/récepteurs radios dudit premier groupement et des émetteurs/récepteurs radios appartenant à un ou plusieurs groupements voisins destinataires, si aucune des autres ressources partageant le même créneau temporel avec ladite ressource n'est déterminée comme appartenant à un desdits groupements destinataires, ou à un autre deuxième groupement pour des liaisons vers un desdits groupements destinataires du premier groupement, sauf si le premier groupement et le deuxième groupement n'ont aucun émetteur/récepteur ayant un voisin radio commun dans les groupements destinataires. Ledit système comporte également des troisièmes moyens d'allocation, pour tout ou partie des groupements, de tout ou partie des ressources allouées audit groupement, à un des émetteurs/récepteurs radios du groupement

Le système permet donc une allocation des ressources du réseau de communications mobiles et maillés, minimisant le temps de réalisation de cette allocation et les messages échangés pour réaliser cette allocation.

Selon un mode de réalisation lesdits deuxièmes moyens sont adaptés en outre pour initialiser un indice de priorité associé à chacun desdits groupement à partir du nombre d'émetteurs/récepteurs radios appartenant au groupement, du nombre d'émetteurs/récepteurs radios appartenant aux groupements voisins et des besoins en ressources nécessaires aux émetteurs/récepteurs radios appartenant au groupement. Lesdits deuxièmes moyens sont adaptés pour affecter une ressource au groupement ayant l'indice de priorité le plus faible et pouvant utiliser ladite ressource pour la communication entre des émetteurs/récepteurs radios dudit groupement, ou pour affecter une ressource au premier groupement ayant l'indice de priorité le plus faible et pouvant utiliser ladite ressource pour la communication entre des émetteurs/récepteurs radios dudit groupement et des émetteurs/récepteurs radios appartenant à un ou plusieurs groupements destinataires voisins, si aucune des autres ressources partageant le même créneau temporel avec ladite ressource n'est déterminée comme appartenant à un des groupements voisins ou à un autre deuxième groupement pour des liaisons vers un desdits groupements destinataires du premier groupement, sauf éventuellement si ledit premier groupement et ledit deuxième groupement n'ont aucun émetteur/récepteur ayant un voisin radio commun appartenant à l'un des groupements destinataires et mettre à jour de l'indice de priorité suite à une affectation de ressource.

Cette caractéristique technique permet d'effectuer une allocation des ressources de manière à maximiser les ressources allouées aux groupements ayant le plus besoin de ressources. Les groupements ayant le plus besoin de ressources sont les groupements ayant un grand nombre d'émetteurs/récepteurs radio dans le groupement, un grand nombre de voisins ou pour lesquels les émetteurs/récepteurs radio du groupement échangent une quantité importante de données.

Selon un mode de réalisation lesdits premiers moyens de détermination sont en outre adaptés pour la détermination dudit émetteur/récepteur radio central, ledit système comprenant en outre des quatrièmes moyens, associés à un groupement, de transmission des ressources nécessaires par tout ou partie des émetteurs/récepteurs radios du groupement, vers l'émetteur/récepteur chef du groupement, de concaténation des ressources nécessaires par l'ensemble des émetteurs/récepteurs radios appartenant au groupement et de transmission des ressources nécessaires concaténées vers l'émetteur/récepteur radio central et des cinquièmes moyens associés à un groupement, de transmission des ressources affectées par les deuxièmes moyens vers l'émetteur/récepteur chef du groupement et de transmission des ressources affectées par les troisièmes moyens vers les émetteurs/récepteurs radios du groupement

Cette caractéristique technique permet de gérer un système d'allocation de ressources centralisé dans lequel la radio centrale permet d'allouer les ressources entre les différents groupements et les radios chef de groupement permettent d'allouer les ressources entre les différents émetteur/récepteurs radio qui sont membres du groupement.

Selon un mode de réalisation les deuxièmes moyens et/ou les troisièmes moyens sont adaptés pour le partage des créneaux temporels en sous créneaux temporels et l'affectation des sous créneaux temporels à des émetteurs/récepteurs radios pouvant être différents ou des groupements pouvant être différents.

Cette caractéristique technique permet d'améliorer l'allocation des ressources pour la transmission de données ayant besoin d'un faible débit et d'une faible latence. Ces données sont par exemple des données temps réels ou des données de signalisation.

Selon un mode de réalisation ledit systèmecomprend en outre des sixièmes moyens, pour tout ou partie des émetteurs/récepteurs radios et des groupements, de mémorisation d'une autorisation d'utilisation par l'émetteur/récepteur radio ou le groupement de tout ou partie des ressources disponibles.

Cette caractéristique technique permet de gérer une situation dans laquelle un réseau ce scinde en deux réseaux indépendants et d'éviter les interférences entre les réseaux indépendants.

Avantageusement le procédé d'allocation de ressources de communications, une ressource comprenant un créneau temporel et au moins un canal associé, ledit canal comprenant au moins une fréquence d'émission ou de réception utilisable durant ledit créneau temporel, dans un réseau maillé mobile comprenant un premier ensemble d'émetteurs/récepteurs radios communiquant entre eux par l'intermédiaire de liaisons radios, au moins un groupement, comportant un deuxième ensemble d'au moins un émetteur/récepteur radio dudit premier ensemble, ledit deuxième ensemble comprenant un émetteur/récepteur chef dans une relation chef subordonné avec l'ensemble des émetteurs/récepteurs radio une émetteur/récepteur radio central du réseau appartenant audit premier ensemble, ledit procédé étant caractérisé en ce qu'il comporte une première étape de détermination du ou desdits groupement une deuxième étape d'allocation de tout ou partie desdites ressources par affectation d'une ressource à un unique groupement pouvant utiliser ladite ressource pour une ou des communications entre des émetteurs/récepteurs radios dudit groupement ; ou par affectation d'une ressource à un unique premier groupement pouvant utiliser ladite ressource pour la communication entre des émetteurs/récepteurs radios dudit premier groupement et des émetteurs/récepteurs radios appartenant à un ou plusieurs groupements voisins destinataires, si aucune des autres ressources partageant le même créneau temporel avec ladite ressource n'est déterminée comme appartenant à un desdits groupements destinataires, ou à un autre deuxième groupement pour des liaisons vers un desdits groupements destinataires du premier groupement, sauf si le premier groupement et le deuxième groupement n'ont aucun émetteur/récepteur ayant un voisin radio commun dans les groupements destinataires et une troisième étape d'allocation, pour tout ou partie des groupements, de tout ou partie des ressources allouées audit groupement, par l'émetteur/récepteur chef du groupement à un des émetteurs/récepteurs radios du groupement.

L'invention sera mieux comprise et d'autres avantages apparaîtront à la lecture de la description détaillée faite à titre d'exemple non limitatif et à l'aide des figures parmi lesquelles :

- La figure 1 présente la définition des ressources
- La figure 2 présente la définition d'un réseau de communication mobile et maillé
- La figure 3 présente un exemple de groupements qui sont voisins
- La figure 4 présente un exemple de groupements qui ne sont pas voisins
- La figure 5 présente la différence entre les différents types de communications
- La figure 6 présente un premier mode de réalisation du système suivant un aspect de l'invention
- La figure 7 présente un premier mode de réalisation du procédé suivant un aspect de l'invention
- La figure 8 présente un exemple d'allocation de ressources dans un réseau de communication maillé mobile

L'invention est réalisée dans un réseau de communication mobile et maillé présentant une organisation dynamique. Cette organisation permet de regrouper des émetteurs/récepteurs radios en une pluralité de groupements. Chaque groupement comprend un ensemble d'émetteurs/récepteurs radios et parmi ces émetteurs/récepteurs radio, un des émetteurs/récepteurs radios est désigné pour être l'émetteur/récepteur chef du groupement. Chaque émetteur/récepteur radio appartient à un unique groupement. De plus parmi les émetteurs/récepteurs radios de l'ensemble du réseau un des émetteurs/récepteurs radios est désigné pour être l'émetteur/récepteur central du réseau.

Les besoins en transmission des émetteurs/récepteurs dans le réseau peuvent être traduits en besoin de transmission a l'intérieur du groupement et entre groupements voisins. D'une façon générale un type de transmission entre groupements implique un groupement source S et un ou plusieurs groupement destinataires D1,D2,D3 voisins.

Les transmissions ayant lieu dans le réseau sont des types suivants :

- Des communications d'un émetteur/récepteur radio d'un groupement vers un ou plusieurs émetteurs/récepteurs radios du même groupement. Ces communications sont également appelées communication intra.
- Des communications d'un émetteur/récepteur radio d'un groupement vers une ou plusieurs émetteurs/récepteurs radios d'un autre groupement Ces communications sont également appelées communication inter point à point.
- Des communications d'un émetteur récepteur d'un groupement vers les émetteurs récepteurs des groupement voisins dit type inter broadcast
- De la communication d'un émetteur récepteur radio d'un groupement vers tous les émetteurs récepteur radio voisins qu'ils appartiennt ou non au même groupement. Ces communications sont également appelées communications broadcast

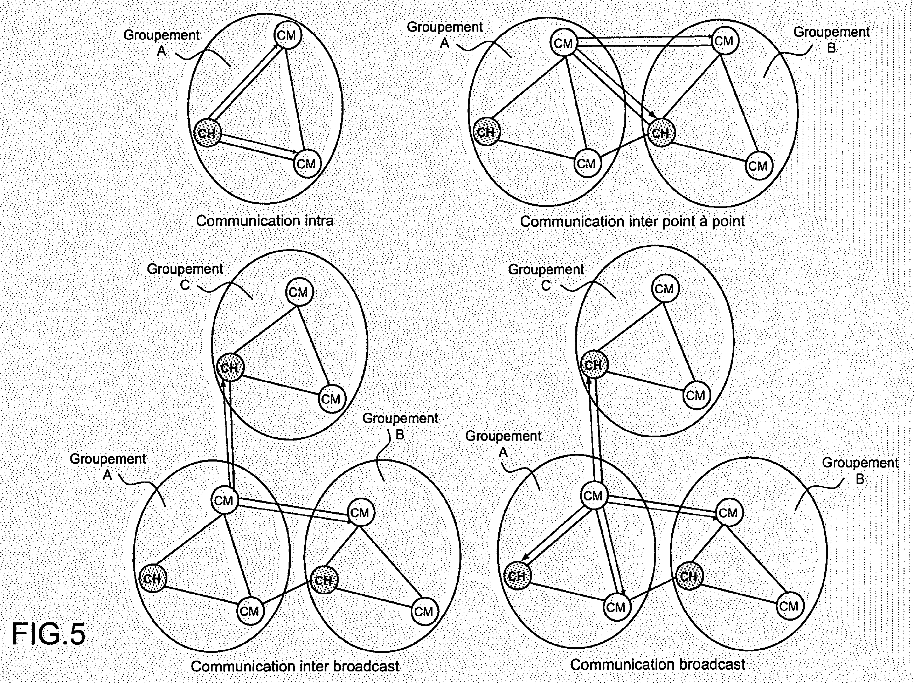

La figure 5 présente la différence entre ces différents types de communication.

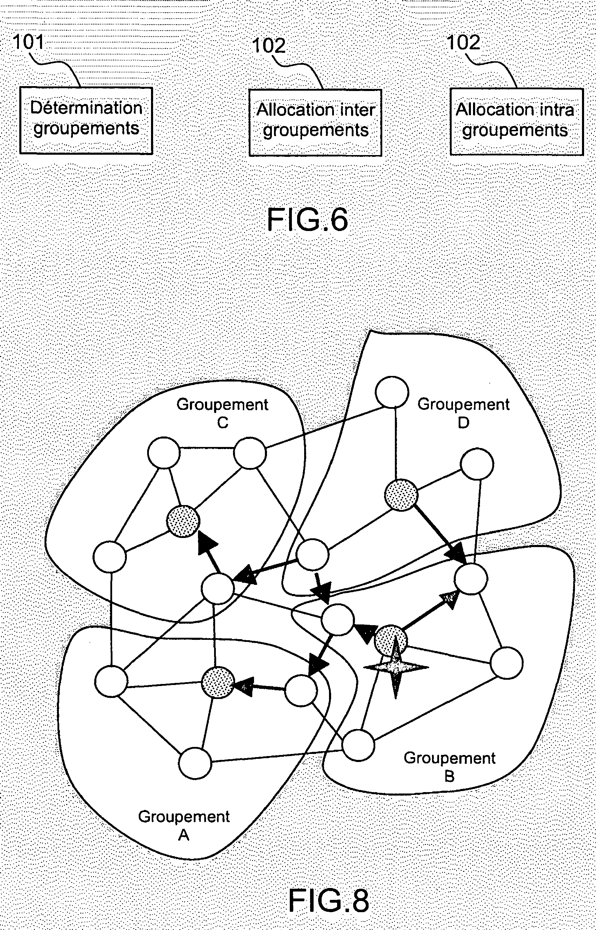

Le système tel que présenté figure 6 comporte un premier dispositif 101 de détermination du ou des groupements. Ce dispositif va donc permettre de déterminer la topologie du réseau, qui sera utilisée par les dispositifs suivants.

Le système comporte également un deuxième dispositif 102 d'allocation des ressources aux différents types de communications des groupements. Cette allocation est déterminée à partir de considérations topologiques et des besoins en communication exprimés par les émetteurs/récepteurs. Les besoins de chaque émetteur récepteur d'un groupement sont organisées et regroupées selon leur type (c.à.d type intra, type inter broadcast, type inter point à point ou broadcast) par le chef du groupement puis transmis à l'émetteur récepteur central. L'allocation s'effectue en respectant par ailleurs des contraintes de voisinages entre les différents émetteurs/récepteurs radios Cette allocation est réalisée en respectant les règles suivantes :

- En général pas d'allocation sur le même créneau temporel entre deux types de communications de groupement si le groupement source de l'un des types est dans les groupements destinataire de l'autre
- En général pas d'allocation sur le même créneau temporelentre deux types de communications de groupement si les communications de groupement comprennent des groupements destinataires communs.
- Cependant les deux règles précédentes peuvent ne pas être appliquées si les émetteurs/récepteurs impliquées sont distinctes. Ainsi si deux groupements A et B ne sont pas en voisinage fort les communications A vers Di et B vers Di peuvent utiliser le même créneau temporel, même si les communications de groupement ont des groupement destinataires communs.
- Il résulte des règles précédentes qu'il n' y a pas d'allocation sur le même créneau temporel d'une ressource utilisée pour une communication inter d'un groupement A et d'une ressource intra ou inter d'un groupement B si les 2 groupements sont en voisinage.
- Pas d'allocation multiple de la même ressource dans le réseau.

L'allocation ce fait donc par affectation d'une ressource à un unique groupement pouvant utiliser ladite ressource pour une ou des communications entre des émetteurs/récepteurs radios dudit groupement, si aucune des autres ressources partageant le même créneau temporel avec ladite ressource n'est déterminée comme appartenant au groupement ; ou par affectation d'une ressource à un unique groupement A pouvant utiliser ladite ressource pour la communication entre des émetteurs/récepteurs radios dudit groupement A et des émetteurs/récepteurs radios appartenant à un ou plusieurs groupements voisins destinataires, si aucune des autres ressources partageant le même créneau temporel avec ladite ressource n'est déterminée comme appartenant à un desdits groupements destinataires, ou à un autre groupement B pour des liaisons vers un desdits groupements destinataires du groupement A, sauf éventuellement si le groupement A et le groupement B n'ont aucun émetteur/récepteur ayant un voisin radio commun dans les groupements destinataires.

Ces règles permettent de résoudre les cas de conflits et l'indépendance de décision dans l'utilisation des ressources entre chefs de groupement. C'est à dire que chaque chef de groupement peut, dans la phase d'allocation de ressources aux membres du groupement, affecter les ressources aux subordonnés de son groupement sans avoir à se coordonner avec les autres chef de groupement. Ce mécanisme peut être distribué sur tout ou partie des émetteurs/récepteurs radios du réseau ou bien être réalisé par l'émetteur/récepteur central. Cet émetteur/récepteur central est choisi dynamiquement de façon à minimiser la plus grande distance en nombre de bond radio entre le récepteur central et les chefs de groupements. Cela permet de minimiser les flux de signalisation et les délais d'attribution qui sont directement proportionnels à cette distance. Dans un mode de réalisation cette allocation est réalisée de la façon suivante en ne considérant que des communications de groupement intra et de broadcast :

Le deuxième dispositif d'allocation utilise en entrée un ensemble de requêtes représentant les besoins en ressources de chaque groupement. Chaque besoin en ressource est caractérisé par :

- Le type de communication, communication intra groupe ou communication inter groupe
- Un poids qui caractérise la criticité de la demande
- Le groupement auquel est associé ce besoin de ressource.

A chaque groupement est associé un ensemble de variables, caractérisantes de la topologie, déterminé de la façon suivante :

- Une variable caractérisant la topologique intra dont le poids est fonction du rapport entre le nombre d'émetteurs/récepteurs radio dans le groupement et le nombre d'émetteurs/recepteurs radio total du réseau.
- Une variable caractérisant la topologique inter dont le poids est fonction du rapport entre le nombre de voisins à 1 et 2 bonds du groupement et la somme totale des nombres de voisins à 1 et 2 bonds de tous les groupements du réseau.

Par voisinage à 1 et 2 bonds d'un groupement nous entendons l'ensemble des émetteurs/récepteurs radios n'appartenant pas à ce groupement et voisin à 1 ou 2 bonds d'au moins un émetteur radio du groupement.

Un émetteur/récepteur est dit voisin à 2 bonds d'une autre émetteur/récepteur s'ils ne sont pas voisins à 1 bond et s'ils ont au moins un émetteur/récepteur voisin commun.

Le dispositif d'allocation 102 considère alors chaque ressource disponible de façon séquentielle. La ressource considérée est affectée au besoin de ressource, autorisé au regard des règles exprimées plus haut et dont le poids est le plus élevé. Ce besoin de ressource voit alors son poids diminuer et le dispositif traite alors la ressource disponible suivante.

Un exemple de résultat d'allocation par l'émetteur central est donné dans le tableau ci-dessous. Il correspond au réseau présenté sur la figure 8 :

|  | CT1 | CT2 | CT3 | CT4 | CT5 | CT6 | CT7 | CT8 | CT9 | CT10 | CT11 | CT12 | CT13 |
|---|---|---|---|---|---|---|---|---|---|---|---|---|---|
| Canal 1 | 1A | 4R | 3R | 1R | 2R | 1A | 4R | 3R | 1R | 2R | 1A | 4R | 3R |
| Canal 2 | 4A |  | 2A |  | 3A | 4A |  | 2A |  | 3A | 4A |  | 2A |
| Canal 3 | 1A |  | 2A |  | 3A | 1A |  | 2A |  | 3A | 1A |  | 2A |
| Canal 4 | 4A |  |  |  |  | 4A |  |  |  |  | 4A |  |  |
| Canal 5 | 4A |  |  |  |  | 4A |  |  |  |  | 4A |  |  |

Dans le tableau précédant CT désigne le créneau temporel, xA désigne l'allocation de la ressource au groupement x pour les communications intra, xR désigne l'allocation de la ressource au groupement x pour les communications inter.

On constate que dans ce réseau seul les groupements 2 et 3 ne sont pas voisins. C'est pour cette raison que le dispositif d'allocation arrive à mettre dans le même créneau temporel des ressources inter du groupement 3 avec des ressources intra du groupement 2 (par ex. CT3) et inversement (par ex. CT13). Par contre ce cas de figure ne se produit pour les autres groupements.

L'allocateur parvient cependant à mettre dans le même créneau temporel des ressources intra de différents groupements.

Dans un mode de réalisation centralisé il est nécessaire que le premier dispositif 101 de détermination du ou des groupements soit ne plus adapté pour la détermination et de l'émetteur/récepteur radio central.

Le système comporte un troisième dispositif 103 permettant de répartir les ressources allouées à un groupement entre les différents émetteurs/récepteurs appartenant au groupement. Dans un mode de réalisation cette allocation peut être réalisée de manière distribuée entre tout ou partie des émetteurs/récepteurs radio du groupement. Dans un autre mode de réalisation cette allocation peut être effectuée par l'émetteur/récepteur chef du groupement, ce mode de réalisation centralisé permet de limiter les échanges de messages et donc la charge du réseau. Ce troisième dispositif d'allocation utilise seulement le besoin immédiat, de façon indépendante du besoin ayant permis l'allocation de la ressource au groupement par le dispositif 102. Il est cependant nécessaire de respecter l'attribution aux types de transmission (communication intra groupement ou communication inter groupement). Dans le cas d'une allocation centralisée l'émetteur/récepteur chef de groupement diffuse ensuite aux émetteurs/récepteurs du groupement une description de l'allocation des ressources.

Dans un mode de réalisation du troisième dispositif, chaque émetteur/récepteur est caractérisé par un indice de priorité dont la valeur est par exemple N/D où N est le nombre de créneaux temporels ou de ressources déjà attribués à l'émetteur/récepteur et D est le nombre d'allocation demandées par seconde. Par exemple si l'on demande 1 ressource sur 10 et que chaque ressource a une durée de 24ms alors D=10/0,0240=4,17. Le dispositif alloue alors les ressources pour les émetteurs/récepteurs ayant l'indice de priorité le plus prioritaire. Cette ressource allouée à l'émetteur/récepteur doit cependant être de type compatible avec le type déterminé par le deuxième dispositif 102.

Dans une mode de réalisation il est possible de réallouer une ressource déjà alloué à un autre émetteur/récepteur. Cette réallocation ne doit cependant se faire que si l'indice de priorité de l'émetteur/récepteur est inférieur à l'indice de priorité de l'émetteur/récepteur pour lequel la ressource est réallouée.

Dans un mode de réalisation, du deuxième dispositif d'allocation 102, il est possible de définir pour chaque groupement un indice de priorité en fonction de du nombre d'émetteurs/récepteurs radios appartenant au groupement du nombre d'émetteurs/récepteurs radios appartenant aux groupements voisins et des ressources nécessaires aux émetteurs/récepteurs radios appartenant au groupement. Cet indice permettra au deuxième dispositif d'allocation des ressources de choisir les groupements ayant l'indice de priorité le plus prioritaire. Ensuite lorsqu'une ressource est allouée à un groupement l'indice de priorité dudit groupement est mise à jour. Dans un mode de réalisation cet indice peut-être $(T-t(j))/D(j)$ dans cette relation T est l'instant courant, $t(j)$ est l'instant de la dernière allocation à un groupement j et $D(j)$ est le délai maximum souhaité entre l'allocation de deux ressources. Le dispositif 102 va alors allouer des ressources au groupement j pour lequelle la relation $(T-t(j))/D(j)$ est maximale.

Dans un mode de réalisation centralisé, le deuxième dispositif 102 est contenu dans la émetteur/récepteur radio central et le troisième dispositif 103 est contenu dans les émetteurs/récepteurs chef de groupement. Ce mode de réalisation comporte un quatrième dispositif de transmission des ressources nécessaires par tout ou partie des émetteurs/récepteurs du groupement, vers l'émetteur/récepteur chef du groupement, de concaténation des ressources nécessaires par l'ensemble des émetteurs/récepteurs appartenant au groupement et de transmission des ressources nécessaires concaténées vers l'émetteur/récepteur radio central. Ce mode de réalisation comporte de plus un cinquième dispositif associé à un groupement, de transmission des ressources affectées par le deuxième dispositif 102 vers l'émetteur/récepteur chef du groupement et de transmission des ressources affectées par le troisième dispositif 103 vers les émetteurs/récepteurs du groupement.

Ces dispositifs utilisent la transmission de quatres types de messsages de signalisation différents :

- Un message permettant la demande de ressources, transmis par chaque subordonné du groupement vers son chef et contenant la liste des flux émis par ce subordonné. Chaque flux est caractérisé par les adresses source et destination et une valeur qui identifie le contrat de service lui même caractérisé par un débit et une latence requise, cette valeure peut par exemple utiliser le champs comme sous l'acronyme DSCP pour « Differentiated Services Code Point ».

- Un message permettant la transmission par le chef de chaque groupement vers l'émetteur/récepteur radio central et qui résume les demandes reçues de ses membres. Pour chaque subordonné le chef de cluster transmet une seule demande correspondant à la plus faible des latences des flux reçues de ce membre et la somme des demandes de débits des flux reçus de ce subordonné.

- Un message transmis par l'émetteur/récepteur radio central vers tous les chef de groupement et contenant la liste des ressources alloués à chaque groupement.
- Un message transmis par chaque chef de groupement vers ses subordonné et contenant la liste des ressources allouées à chaque membre.

Dans un mode de réalisation centralisé il est nécessaire que le premier dispositif 101 de détermination du ou des groupements soit ne plus adapté pour la détermination et de l'émetteur/récepteur radio central.

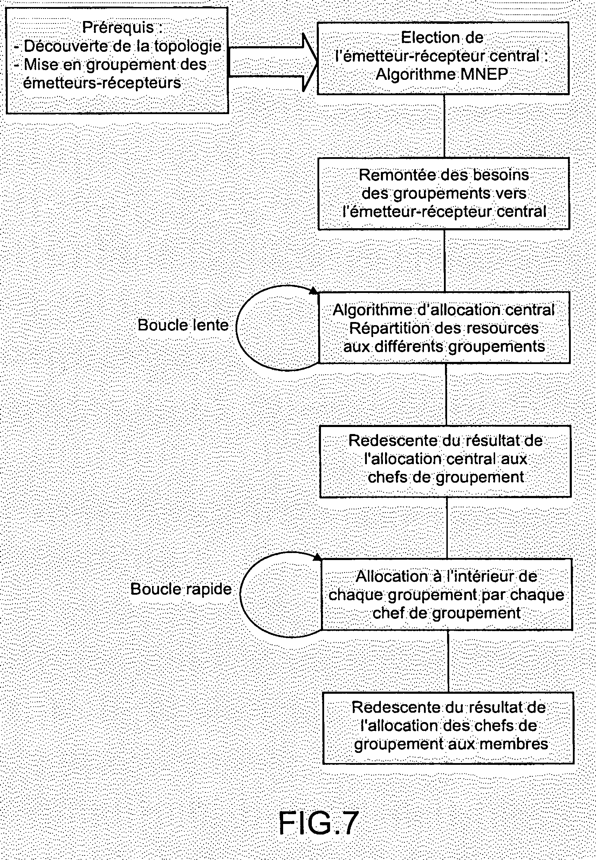

La figure 7 donne les différentes étapes du procédé suivant un mode de réalisation de l'invention. Ce procédé comporte les étapes suivantes :

- En prérequis le système doit connaître la topologie du réseau et avoir procédé au regroupement des émetteur-récepteur avec élection d'un chef pour chaque groupement. Rappeler les références.
- Une étape d'élection de l'émetteur/récepteur central. Cette élection peut être réalisé au moyen de l'algorithme MNEP donné plus bas.
- Une étape de transmission des besoins des émetteurs/récepteurs chef de groupement vers l'émetteur/récepteur central.
- Une étape d'allocation des ressources aux différents groupements par la émetteur/récepteur central. Un exemple de réalisation de cet algorithme est décrit plus bas.
- Une étape de transmission des résultats de l'allocation central aux émetteurs/récepteurs chefs de groupement.
- Une étape d'allocation par les émetteurs/récepteurs chefs de groupement. Un exemple de réalisation de cet algorithme est décrit plus bas.
- Une étape de transmission du résultat de l'allocation par les émetteurs/récepteurs chefs de groupement vers leurs émetteurs/récepteurs subordonnés du groupement.

Le procédé permettant la réalisation de la détermination de l'émetteur/récepteur central par élection est le suivant:

On pose les définitions suivantes/

- V l'ensemble des émetteurs/récepteurs du réseau.
- E l'ensemble des liaisons radios entre des émetteurs/récepteurs {x,y} du réseau, avec $x \in V$ et $y \in V$ (liens non orientés)
- w(x,y) le poids associé au lien (x,y). w(x,y)>0.
- dist(x,y) la distance entre x et y avec $x \in V$ et $y \in V$ qui se calcule à l'aide d'un algorithme de calcul de plus court chemin entre x et y.
- exc(x)= $\max y \in V$ dist(x,y) : l'excentricité d'un noeud $x \in V$.
- rad(G)= $\min x \in G$ exc(x) le rayon du réseau.
- diam(G)= $\max x \in G$ exc(x) le diamètre du réseau.
- Soit P l'ensemble des émetteurs/récepteurs $x \in V$ tel que exc(x) = rad(G). P est l'ensemble des noeuds qui sont au centre du réseau.
- L'emetteur/récepeteur central est l'émetteur/récepteur $x \in P$ qui a le degré le plus élevé, c'est à dire le plus grand nombre de voisin U. En cas d'égalité l'émetteur/récepteur ayant la plus grande adresse MAC est choisie.

Le procédé permettant l'allocation inter groupement est le suivant. A chaque requête de ressources est associée une valeur de fonction de coût. Soit slot(i) le numéro du dernier créneau temporel alloué à la requête i. Soit D(i) la récurrence demandée par la requête i. Au créneau temporel N la valeur de la fonction de coût de la requête i est (N-slot(i))/D(i). Le principe de l'allocation inter groupement est d'allouer les ressources par groupes de T créneaux temporels en ne considérant que les créneaux temporels de trafic et en omettant les créneaux temporels hybrides, en satisfaisant de façon prioritaire les requêtes en ressource dont la fonction de coût à la valeur la plus élevée. Comme il existe des conflits entre certaines requêtes et que le nombre de canaux fréquentiels disponible associé à chaque créneau temporel d'un groupe de T créneaux temporels peut être variable, l'ordre dans lequel les ressources sont allouées aux requêtes n'est pas indifférent. Pour cette raison à chaque itération de l'algorithme sur un groupe de T créneaux temporels, toutes les permutations des créneaux temporels de ce groupe sont évaluées. Par permutation, tous les créneaux temporels sont évalués un par un, et l'algorithme alloue les canaux fréquentiels aux requêtes en respectant les conflits qui existent entre-elles (deux requêtes peuvent partager un même créneau temporel si elles ne sont pas en conflit uniquement). Une fois l'ensemble des permutations évaluées, seules sont conservées comme candidates celles pour lesquelles sont maximaux le nombre de ressources allouées ainsi que le nombre de requêtes auxquelles au moins une ressource a été allouée. Une fois que l'allocation a été calculée sur un nombre suffisant de groupes de T créneaux temporels, l'algorithme calcule un motif plus court à transmettre aux émetteurs/récepteurs chefs de groupement. Ce message plus court est soit slot_threshold = 0, la variable qui doit prendre comme valeur le nombre de créneaux temporels à partir duquel l'allocateur a alloué au moins une ressource à chaque requête, soit *slots_pattern_starting_slot* et *slots_pattern_ending_slot* qui sont les variables qui prennent respectivement les valeurs des premier et dernier créneaux temporels à retenir dans le motif long pour définir le motif court à distribuer aux Chef de groupement du réseau.

Le procédé est basé sur un traitement itératif qui calcule une allocation sur un grand nombre de créneaux temporels.

TANT QUE la longueur du motif d'allocation est inférieure à la longueur cible FAIRE

Utiliser l'étape EVALUATION DES PERMUTATION DE T SLOTS.

Utiliser l'étape SELECTION DE LA PERMUTATION DE T SLOTS.

Mettre à jour les données d'allocations pour les T créneaux temporels courants sur la base de la permutation sélectionnée.

SI *slot_threshold* est nul ET au moins une ressource a été allouée à chaque requête ALORS

Positionner *slot_threshold* à la longueur actuelle du motif d'allocation.

Ces étapes raccourcissent le motif d'allocation long calculé auparavant pour générer un motif court à distribuer aux émetteurs/récepteurs chef de groupement du réseau. Le principe est que à partir d'une longueur initiale, plus le motif s'allonge plus le coût maximum associé aux requêtes sur ce motif diminue. Ces étapes se terminent lorsque ce coût maximum ne diminue plus de façon sensible.

Utiliser l'étape CALCUL DU MOTIF D'ALLOCATION.

Etape EVALUATION DES PERMUTATIONS DE T SLOTS

Ces étapes évaluent les différentes permutations de créneaux temporels qui existent sur une longueur de T créneaux temporels.

Trier les requêtes par ordre décroissant des valeurs de leur fonction de coût. Initialiser à zéro le nombre maximum de ressources allouées pour une permutation.

Initialiser à zéro un tableau qui contiendra le nombre de ressources allouées pour chaque permutation.

Initialiser à zéro le nombre maximum de requêtes satisfaites pour une permutation.

Initialiser à zéro un tableau qui contiendra le nombre de requêtes satisfaites pour chaque permutation.

POUR chaque permutation des T créneaux temporels FAIRE

Les mises à jours des allocations de créneaux temporels aux requêtes ainsi que des valeurs de fonctions de coûts ne sont valables que dans le contexte de la permutation considérée. Elles ne deviendront définitives que pour la permutation qui sera sélectionnée à l'issu de la boucle.

POUR chaque créneau temporel de la permutation FAIRE

POUR chaque requête de ressource FAIRE

Calculer la valeur de la fonction de coût associée à la requête courante si le créneau temporel considéré lui est alloué.

Trier les requêtes par ordre décroissant des valeurs de leur fonction de coût.

Déterminer le numéro réel du créneau temporel considéré.

POUR chaque requête de ressource (Considérées dans l'ordre décroissant des valeurs de leur fonction de coût) FAIRE

SI il reste des canaux fréquentiels libres sur le créneau temporel considéré ALORS

SI le créneau temporel considéré est déjà alloué (Si c'est le cas c'est forcément sur un canal fréquentiel différent) à une autre requête en conflit ALORS

SI aucun créneau temporel n'a encore été alloué à la requête courante ALORS

Cet étape permet de favoriser les requêtes qui n'ont encore aucune ressource qui leur a été allouée.

Décrémenter de 1 la valeur D(i) de la requête courante.

SINON ALORS

Allouer le premier canal disponible sur le créneau temporel considéré à la requête courante. Augmenter de 1 le nombre de ressources allouées pour la permutation courante.

SINON ALORS

SI aucun créneau temporel n'a encore été alloué à la requête courante ALORS

Décrémenter de 1 la valeur D(i) de la requête courante.

Si nécessaire mettre à jour le nombre maximum de ressources allouées pour une permutation.
Comptabiliser le nombre de requêtes satisfaites par la permutation courante.
Si nécessaire mettre à jour le nombre maximum de requêtes satisfaites pour une permutation.
Ce test ci-dessous est une optimisation de temps de calcul.
SI le nombre de canaux utilisables par créneau temporel est le même pour tous les créneaux temporels ALORS

Sortir de la boucle POUR.

Etape SELECTION DE LA PERMUTATION DE T SLOTS

Chaque permutation ayant été évaluée, il s'agit maintenant de retenir la meilleure. Le processus est en deux étapes.
POUR chacune des permutations de T créneaux temporels FAIRE

Dans une première iteration seules les permutations ayant à la fois le maximum de ressources allouées et le maximum de requêtes satisfaites sont retenues.
SI la permutation courante satisfait le nombre maximum de requêtes ET si le nombre de ressources allouées pour la permutation courante et maximum ALORS

Conserver la permutation courante pour la deuxième étape de sélection des permutations.

Considérer *permutation_1* la première des permutations de T créneaux temporels retenues lors de la première étape.
Initialiser *selected_permutation* à la valeur *permutation_1.*
Extraire *permutation_1* de la liste des permutations de T créneaux temporels retenues lors de la première étape.
TANT QUE la liste des permutations de T créneaux temporels retenues lors de la première étape n'est pas vide FAIRE

Considérer *permutation_2* la première des permutations de T créneaux temporels retenues lors de la première étape.
Extraire *permutation_2* de la liste des permutations de T créneaux temporels retenues lors de la première étape.

POUR chaque requête (Considérées dans l'ordre décroissant des valeurs de leur fonction de coût.) *request_1* considérée dans la permutation *permutation_1* FAIRE

Soit *request_2* la requête de même ordre dans la permutation *permutation_2* que *request_1* dans la permutation *selected_permutation.*
SI la valeur de fonction de coût de la requête *request_2* est inférieure à la valeur de fonction de coût de la requête *request_1* ALORS

Assigner à *selected_permutation* la valeur *permutation_2.*
Sortir de la boucle POUR.

SINON si les valeurs sont égales ALORS

Conserver la valeur courante de *selected_permutation.*

Passer à l'itération suivante de la boucle POUR.

SINON ALORS

Conserver la valeur courante de *selected_permutation.*
Sortir de la boucle POUR.

La permutation sélectionnée est *selected_permutation.*

Etape CALCUL DU MOTIF D'ALLOCATION

Ces étapes génèrent un motif court à distribuer aux Chef de groupement du réseau.
Positionner *slots_pattern_starting_slot* à la valeur 2\**slot_threshold.* Positionner *slots_pattern_ending_slot* à la valeur *slots_pattern_starting_slot* + T-1.
Initialiser à zéro la métrique de coût maximum *previous_max_cost.*
Initialiser à zéro la métrique de coût maximum *max_cost.*

BOUCLER INDÉFINIMENT

POUR chacune des requêtes de ressources i FAIRE

POUR chaque paire de créneaux temporels successifs (slot$_1$, slot$_2$) avec slot$_1$ $\geq$ *slots_pattern_starting* et slot$_2$ $\leq$ *slots_pattern_ ending_slot* FAIRE

Calculer le coût *cost* = (slot$_2$ - slot$_1$)/D(i).
SI *cost* > *max_cost* ALORS

*max_cost = cost*

Calculer le coût *loop_cost* entre les dernier et premier créneaux temporels alloués à la requête i.
SI *loop_cost* > *max_cost* ALORS ALORS

*max_cost = loop_cost*

SI la *previous_max_cost* / *max_cost* $\in$ [0.99, 1.01] ALORS

Sortir de la boucle infinie.

SINON

Incrémenter *slots_pattern_ending_slot* de T.
Assigner à *previous_max_cost* la valeur de *max_cost.*

A la fin de ces étapes, le motif calculé est le motif compris entre les créneaux temporels slots_pattern_starting_slot et slots_pattern_ ending_slot.
Le procédé d'allocation des ressources par l'emetteur/récepteur chef de groupement est réalisé dans un mode de réalisation de la façon suivante :

L'émetteur/récepteur chef de groupement prend comme donnée d'entrée le motif d'allocation défini par l'émetteur/récepteur central et en déduit un motif d'allocation comme indiqué dans la section précédente. Parmi les ressources comprises dans ce motif, certaines sont marquées faible latence. Préalablement à toute allocation, l'ensemble de ces ressources sont considérées répondre à une requête fictive.

L'algorithme considère deux types de requêtes : les requêtes grand créneau temporel et les requêtes mini-créneau temporel.
Dans une première grande boucle pour chaque requête excepté la requête fictive on commence par chercher une ressource (mini-créneau temporel ou créneau temporel selon le type de la requête) libre, puis si c'est impossible on cherche à récupérer une ressource (mini-créneau temporel ou créneau temporel selon le type de la requête) au détriment d'une autre requête (excepté la requête fictive). Au plus une seule ressource mini-créneau temporel est allouée par créneau temporel à chaque requête mini-créneau temporel.

Dans une seconde grande boucle un traitement très similaire est réalisé excepté que : (1) les ressources considérées ne sont que des ressources mini-créneau temporel, qui peuvent aussi bien être allouées aux requêtes mini-créneaux temporels qu'aux requêtes grands créneaux temporels ; (2) les ressources créneaux temporels allouées pendant la première grande boucle sont interdites à la récupération. La condition selon laquelle un seul mini-créneau temporel par créneau temporel peut être alloué à une requête mini-créneau temporel est toujours en vigueur.

Dans la troisième et dernière grande boucle le même traitement que lors de la seconde grande boucle est réalisé excepté que : (1) toutes les ressources allouées pendant les deux premières grandes boucles sont interdites à la récupération ; (2) au sein du même grand créneau temporel plusieurs mini-créneaux temporels peuvent désormais être alloués à une requête mini-créneau temporel.

Dans les étapes suivantes, dès qu'une allocation a été réalisée (que ce soit de créneau temporel ou de mini-créneau temporel), l'ensemble des requêtes sont triées par ordre croissant de leur fonction de coût et l'itération courante de la grande boucle en cours d'exécution (1, 2 ou 3) se termine.

Les définitions suivantes sont utilisées:

- Nressource : nombre total de mini-créneaux temporels
- kalloc : nombre total de grands créneaux temporels
- Ngroupe : nombre de requêtes
- $D(i)$ : nombre de créneaux temporels requis pour la demande i
- $Koeff(i) = 1/D(i)$
- $Alloc(i, kr, k)$ : la valeur de $Alloc(i, kr, k)$ indique le canal (aucun si valeur nulle) alloué à la demande i sur le mini-créneau temporel numéro kr dans la répétition k du motif défini par la émetteur/récepteur central
- $A(i, k)$ : vaut 1 si la requête i est compatible du grand créneau temporel k
- $Conflit(i, j)$ : vaut 1 sur les requêtes i et j sont en conflit
- interdits(créneau temporel, canal) : vaut 1 si la ressource (créneau temporel, canal) est interdite à l'allocation
- minislot(i) : indique si la requête i demande un mini-créneau temporel (1) ou un créneau temporel entier (4)
- $Salloc(i)$ indique le nombre de mini-créneaux temporels alloués à la requête i

Le procédé utilise 2 fonctions de coût f1 et f2 définit ci-après :

Dans la première grande boucle de l'algorithme la fonction f1() est utilisée.

Elle est définie comme suit :

$$\text{Si } Salloc(i) = 0 \text{ alors } f1(i) = 0.$$

$$\text{Sinon } f1(i) = (Salloc(k) - minislot(k))/minislot(k) * Koeff(k) + 1/1000$$

$$\text{Si } f1(i) < 1/1000 \text{ alors } f1(i) = 1/1000$$

La division par minislot(k) fait qu'en ce qui concerne la valeur de la fonction de coût, allouer 1 créneau temporel (=4 mini-créneaux temporels) à une requête créneau temporel est équivalent à allouer un mini-créneau temporel à une requête mini-créneau temporel

Dans la deuxième grande boucle de l'algorithme la fonction f2() est utilisée. Elle est définie comme suit :

$$\text{Si } Salloc(i) = 0 \text{ alors } f2(i) = 0.$$

$$\text{Sinon } f2(i) = (Salloc(k) - 1)/minislot(k) * Koeff(k) + 1/1000$$

$$\text{Si } f2(i) < 1/1000 \text{ alors } f2(i) = 1/1000$$

La différence entre f1() et f2() tient dans le remplacement de la valeur minislot(k) par la constante 1. Cela permet que l'allocation d'un mini-créneau temporel à une requête grand créneau temporel compte moins que l'allocation d'un mini-créneau temporel à une requête mini-créneau temporel.

Etapes principales du procédé

Etape GRANDE BOUCLE 1

Tant qu'au moins une ressource créneau temporel ou mini-créneau temporel a été allouée ou réallouée lors de l'itération précédente de la GRANDE BOUCLE 1 alors chercher à allouer une ressource à une requête (While convergence = 0)

Tant qu'il reste des requêtes à évaluer (La requête fictive est ignorée, les requêtes sont considérées les unes après les autres, dans l'ordre croissant de leur fonction de coût f1 ().) et qu'aucun créneau temporel n'a été alloué à la requête courante (While test2 = 0 And l1 < Ngroupe)

Invoquer Etape BOUCLE 1 RECHERCHE DE RESSOURCE LIBRE Si aucune ressource n'a été allouée pendant la Etape BOUCLE 1
RECHERCHE DE RESSOURCE LIBRE alors il faut chercher à récupérer une ressource au détriment d'une autre requête
Utiliser l'étape Etape BOUCLE 1 RECUPERATION DE RESSOURCE

Marquer toutes les ressources allouées aux requêtes grand créneau temporel comme étant interdites à la récupération
Trier les requêtes par ordre croissant de leur fonction de coût f2()

Etape GRANDE BOUCLE 2

Tant qu'au moins une ressource mini-créneau temporel a été allouée ou réallouée lors de l'itération précédente de la GRANDE BOUCLE 2 alors chercher à allouer une ressource à une requête (While convergence = 0)

Tant qu'il reste des requêtes à évaluer (La requête fictive est ignorée, les requêtes sont considérées les unes après les autres, dans l'ordre croissant de leur fonction de coût f2().) et qu'aucun mini-créneau temporel n'a été alloué à la requête courante (While test2 = 0 And l1 < Ngroupe)

Utiliser l'étape Etape BOUCLE 2 RECHERCHE DE RESSOURCE MINI-SLOT LIBRE
Si aucune ressource n'a été allouée pendant l'étape Etape BOUCLE 2 RECHERCHE DE RESSOURCE MINI-SLOT LIBRE alors il faut chercher à récupérer une ressource au détriment d'une autre requête.

Utiliser l'étape Etape BOUCLE 2 RECUPERATION DE RESSOURCE MINI SLOT

Marquer toutes les ressources allouées pendant les traitements réalisés pendant l'étape GRANDE BOUCLE 1 et l'étape GRANDE BOUCLE 2 comme étant interdites à la récupération
Trier les requêtes par ordre croissant de leur fonction de coût f2()

Etape GRANDE BOUCLE 3

Tant qu'au moins une ressource mini-créneau temporel a été allouée ou réallouée lors de l'itération précédente de la GRANDE BOUCLE 3 alors chercher à allouer une ressource à une requête (While convergence = 0)

Tant qu'il reste des requêtes à évaluer (La requête fictive est ignorée, les requêtes sont considérées les unes après les autres, dans l'ordre croissant de leur fonction de coût f2().) et qu'aucun créneau temporel n'a été alloué à la requête courante (While test2 = 0 And l1 < Ngroupe)
Utiliser l'étape Etape BOUCLE 3 RECHERCHE DE RESSOURCE MINI SLOT LIBRE
Si aucune ressource n'a été allouée pendant l'étape Etape BOUCLE 3 RECHERCHE DE RESSOURCE MINI SLOT LIBRE alors il faut chercher à récupérer une ressource au détriment d'une autre requête.

Utiliser l'étape Etape BOUCLE 3 RECUPERATION DE RESSOURCE MINI SLOT

Etape BOUCLE 1 RECHERCHE DE RESSOURCE LIBRE

Recherche d'une ressource libre (Les grands créneaux temporels sont considérés un par un, à partir du grand créneau temporel décalé d'une constante (par exemple 7) par rapport au dernier grand créneau temporel alloué à la requête courante.) (While test3 = 0 And kb < kalloc)

Si la requête courante est une requête grands créneaux temporels (If mini-slot(i) = 4 Then)
Vérifier que les conditions suivantes sont satisfaites :

- le grand créneau temporel est compatible de la requête en cours (A(i, kr) = 1)
- le grand créneau temporel n'est pas déjà alloué à la requête courante (Alloc(i, krs, k) = 0)
- aucune requête en conflit avec la requête en cours n'a de ressource au sein du grand créneau temporel
- il reste un canal libre sur le grand créneau temporel et sur chacun des mini-créneaux temporels du grand créneau temporel Si ces condition sont vérifiées alors (If test4 = 0 And canal > 0 Then)

Allouer les 4 mini-créneaux temporels à la requête courante
Trier les requêtes par ordre croissant de leur fonction de coût f1 () Si la requête courante est une requête mini-créneaux temporels (If minislot(i) = 1 Then) :
Vérifier que les conditions suivantes sont satisfaites :

- dans le grand créneau temporel courant aucun mini créneau temporel n'est déjà alloué à la requête courante
- le grand créneau temporel est compatible de la requête en cours

Etape BOUCLE MINI-SLOT 1

Si toutes ces condition sont vérifiées alors considérer les mini-créneaux temporels un par un jusqu'à ce qu'une ressource soit allouée à la requête courante (While imini < 4 And testmini = 0)

Vérifier que les conditions suivantes sont satisfaites :

- aucune requête en conflit avec la requête en cours n'a de ressource sur le mini-créneau temporel
- il reste un canal libre sur tous les mini-créneaux temporels du grand créneau temporel

Si ces condition sont vérifiées alors (If test4 = 0 And canal > 0 Then) :

Allouer à la requête courante le mini-créneau temporel sur le premier canal libre sur tous les mini-créneaux temporels du grand créneau temporel
Trier les requêtes par ordre croissant de leur fonction de coût f1()

Si aucune allocation de mini-créneau temporel à la requête courante n'a été faite alors (If testmini = 0 Then)

Etape BOUCLE MINI-SLOT 2

Faire le même traitement que dans la BOUCLE MINI SLOT 1 mais en acceptant d'allouer un canal sur un mini-créneau temporel même si ce canal n'est pas libre sur tous les mini-créneaux temporels du grand créneau temporel.

Etape BOUCLE 1 RECUPERATION DE RESSOURCE

Recherche d'une ressource à récupérer (Les grands créneaux temporels sont considérés un par un, à partir du grand créneau temporel décalé d'une constante (par exemple 7) par rapport au dernier grand créneau temporel alloué à la requête courante.) (While test3 = 0 And kb < kalloc)

Par défaut la ressource considérée est récupérable.
Si la requête courante est une requête grands créneaux temporels (If mini-slot(i) = 4 Then)

Vérifier que les conditions suivantes sont satisfaites :

- le grand créneau temporel est compatible de la requête en cours (A(i, kr) = 1)

- le grand créneau temporel n'est pas déjà alloué à la requête courante (Alloc(i, krs, k) = 0)

Si toutes ces condition sont vérifiées alors considérer un par un les 4 mini-créneaux temporels du grand créneau temporel

Chercher s'il existe sur le mini-créneau temporel courant une requête j ayant un canal qui lui est alloué et qui est en conflit avec la requête courante i. Si c'est le cas et que ou bien ((f1 (i, n+1) > f1(j, n)) ou (f1(i, n+1) = f1(j, n) et i > j) ou que la préemption au profit de i au détriment de j est interdite alors aucune récupération de canal n'est possible sur le grand créneau temporel.

S'il est possible de récupérer un canal sur la ressource grand créneau temporel alors (If test4 = 0 Then)

Rechercher la requête au détriment de laquelle la ressource va être récupérée
Allouer à la requête courante tous les mini-créneaux temporels sur le canal sélectionné
Dés-allouer les ressources appropriées :

Pour les requêtes en conflit avec la requête courante, tous les canaux alloués sur tous les mini-créneaux temporels du grand créneau temporel
Pour les requêtes pas en conflit avec la requête courante, uniquement le canal qui a été récupéré, sur tous les mini-créneaux temporels du grand créneau temporel

Trier les requêtes par ordre croissant de leur fonction de coût f1()

Si la requête courante est une requête mini-créneaux temporels (If mini-slot(i) = 1 Then)

Vérifier que les conditions suivantes sont satisfaites :

- dans le grand créneau temporel courant aucun mini créneau temporel n'est déjà alloué à la requête courante
- le grand créneau temporel est compatible de la requête en cours Etape BOUCLE MINI-SLOT 3

Si toutes ces condition sont vérifiées alors considérer un par un les 4 mini-créneaux temporels du grand créneau temporel jusqu'à ce qu'une ressource ait pu être allouée à la requête courante au détriment d'une autre requête (While imini < 4 And testmini = 0)

Chercher s'il existe sur le mini-créneau temporel courant une requête j ayant un canal qui lui est alloué et qui est en conflit avec la requête courante i. Si c'est le cas et que ou bien ((f1(i, n+1) > f1(j, n)) ou (f1(i, n+1) = f1(j, n) et i > j) ou que la préemption au profit de i au détriment de j est interdite alors aucune récupération de canal n'est possible sur le mini-créneau temporel courant
S'il est possible de récupérer un canal sur le mini-créneau temporel alors (If test4 = 0 Then

Rechercher la requête au détriment de laquelle la ressource va être récupérée Allouer à la requête courante le mini-créneau temporel sur le canal sélectionné
Dés-allouer les ressources appropriées

Pour chaque requête en conflit avec la requête courante :

Si la requête est une requête grand créneau temporel, tous ses canaux sur tous les mini-créneaux temporels du grand créneau temporel Si la requête est une requête mini-créneau temporel, son canal sur le mini-créneau temporel réalloué à la requête courante

Pour chaque requête pas en conflit avec la requête courante :

Si la requête est une requête grand créneau temporel, uniquement le canal qui a été récupéré sur tous les mini-créneaux temporels du grand créneau temporel
Si la requête est une requête mini-créneau temporel, uniquement le canal qui a été récupéré sur le mini-créneau temporel réalloué à la requête courante

Trier les requêtes par ordre croissant de leur fonction de coût f1()

Etape BOUCLE 2 RECHERCHE DE RESSOURCE MINI-SLOT LIBRE

Recherche d'une ressource libre (Les grands créneaux temporels sont considérés un par un, à partir du grand créneau temporel décalé d'une constante (par exemple 7) par rapport au dernier grand créneau temporel alloué à la requête courante) (While test3 = 0 And kb < kalloc)

Considérer un par un les mini-créneaux temporels du grand créneau temporel (While imini < 4 And testmini = 0)
Vérifier que les conditions suivantes sont satisfaites :

- il y a au moins un canal non interdit sur le mini-créneau temporel courant
- la requête courante si elle est mini-créneau temporel n'a pas déjà un canal sur l'un des mini-créneaux temporels du grand créneau temporel -
- le grand créneau temporel est compatible de la requête en cours (A(i, kr) = 1)
- le mini-créneau temporel n'est pas déjà alloué à la requête courante (Alloc(i, krs, k) = 0

Si toutes ces condition sont satisfaites alors

Vérifier que les conditions suivantes sont satisfaites :

- il y a un canal de libre sur le mini-créneau temporel
- aucune requête en conflit ne possède de canal sur le mini-créneau temporel

Si ces deux conditions sont vérifiées alors (If test4 = 0 And canal > 0 Then)

Allouer le mini-créneau temporel courant à la requête courante sur le premier canal libre
Trier les requêtes par ordre croissant de leur fonction de coût f2()

Etape BOUCLE 2 RECUPERATION DE RESSOURCE MINI SLOT

Recherche d'une ressource à récupérer (Les grands créneaux temporels sont considérés un par un, à partir du grand créneau temporel décalé d'une constante (par exemple 7) par rapport au dernier grand créneau temporel alloué à la requête courante.) (While test3 = 0 And kb < kalloc)

Par défaut la ressource considérée est récupérable.

Considérer un par un les mini-créneaux temporels du grand créneau temporel (While imini < 4 And testmini = 0)

Vérifier que les conditions suivantes sont satisfaites :

- il y a au moins un canal non interdit sur le mini-créneau temporel courant
- la requête courante si elle est mini-créneau temporel n'a pas déjà un canal sur l'un des mini-créneaux temporels du grand créneau temporel
- le grand créneau temporel est compatible de la requête en cours (A(i, kr) = 1)
- le mini-créneau temporel n'est pas déjà alloué à la requête courante (Alloc(i, krs, k) = 0

Si toutes ces condition sont vérifiées alors chercher s'il existe sur le mini-créneau temporel courant une requête j ayant un canal qui lui est alloué et qui est en conflit avec la requête courante i. Si c'est le cas et que ou bien ((f2(i, n+1) > f2(j, n)) ou (f2(i, n+1) = f2(j, n) et i > j) ou que la préemption au profit de i au détriment de j est interdite alors aucune récupération de canal n'est possible sur le mini-créneau temporel courant
S'il est possible de récupérer un canal sur le mini-créneau temporel alors (If test4 = 0 Then)

Rechercher la requête au détriment de laquelle la ressource va être récupérée
Allouer à la requête courante le mini-créneau temporel sur le canal sélectionné
Dés-allouer les ressources appropriées :

Pour chaque requête en conflit avec la requête courante, son canal sur le mini-créneau temporel réalloué à la requête courante
Pour chaque requête pas en conflit avec la requête courante, son canal uniquement si c'est le canal qui a été réalloué à la requête courante

Trier les requêtes par ordre croissant de leur fonction de coût f2()

Etape BOUCLE 3 RECHERCHE DE RESSOURCE MINI SLOT LIBRE

Cette procédure est identique à l'étape Etape BOUCLE 2 RECHERCHE DE RESSOURCE MINI-SLOT LIBRE excepté que la condition qui limite l'allocation à une requête d'un mini-créneau temporel par grand créneau temporel n'est plus vérifiée

Etape BOUCLE 3 RECUPERATION DE RESSOURCE MINI SLOT

Cette procédure est identique à l'étape Etape BOUCLE 2 RECUPERATION DE RESSOURCE MINI SLOT excepté que la condition qui limite l'allocation à une requête d'un mini-créneau temporel par grand créneau temporel n'est plus vérifiée

Dans un mode de réalisation, certains créneaux temporels sont divisés en une pluralité de sous créneaux temporels (un partage avantageux peut-être de partager les créneaux temporels en quatre sous créneaux temporels). Le deuxième dispositif 102 ou le troisième dispositif 103 sont adaptés pour utiliser ces sous créneaux temporels. La configuration des créneaux temporels pouvant être partagés est réalisé durant une étape qui précède l'utilisation du système ou durant l'utilisation du système. Ce partage des créneaux temporels permet de transmettre des données ayant besoin d'un faible débit et d'une faible latence. Ces types de données sont par exemple des données de signalisation ou des données temps réel. Cependant il est nécessaire de traiter ces deux types de données de façon différente, en effet la transmission des données de signalisation est permanente alors que la transmission de données temps réel est activée à la demande. Il en résulte donc que lorsque la transmission de données temps réel n'est pas activée les sous créneaux temporels sont disponibles pour la transmission d'autres types de données. Le troisième dispositif 103 peut ne pas être autorisé à utiliser un sous créneau temporel, alloué à un groupement qui coïncide temporellement avec un autre créneau temporel, contenant des seconds sous créneaux temporels, si des émetteurs/récepteurs radios du groupement participent à un échange de données utilisant un de ces seconds sous créneaux temporels. Afin d'éviter qu'un grand nombre de sous créneaux temporels préemptables soient attribués à un même groupement, le deuxième dispositif n'alloue pas des sous créneaux temporels consécutifs à un même groupement. Si certains des sous créneaux temporels n'ont pas pu être alloués à des données temps réels, ils peuvent être utilisés pour la transmission d'autres types de données.

Dans un mode de réalisation un sixième dispositif permet de mémoriser les ressources utilisables par émetteurs/récepteurs radios ou par groupement. De plus, dans ce mode de réalisation, le deuxième et le troisième dispositif d'allocation sont adaptés pour l'allocation de ressources à un émetteur/récepteur radio ou un groupement, uniquement si la ressource est indiquée comme étant utilisable par l'émetteur/récepteur radio ou le groupement. Ce mode de réalisation permet de gérer une possible scission du réseau en deux réseaux indépendants et d'éviter alors des interférences entre ces deux réseaux indépendants.

**Revendications**

1. Système d'allocation de ressources de communications, une ressource comprenant un créneau temporel et au moins un canal associé, ledit canal comprenant au moins une fréquence d'émission et/ou de réception utilisable durant ledit créneau temporel, dans un réseau maillé mobile comprenant:

   - un premier ensemble d'émetteurs/récepteurs radios communiquant entre eux par l'intermédiaire de liaisons radios,
   - au moins un groupement, comportant un deuxième ensemble d'au moins un émetteur/récepteur radio dudit premier ensemble, ledit deuxième ensemble comprenant un émetteur/récepteur chef dans une relation chef subordonnés avec l'ensemble des émetteurs/récepteurs radio du deuxième ensemble ; et
   - un émetteur/récepteur radio central du réseau appartenant audit premier ensemble,

   ledit système étant **caractérisé en ce qu'**il comporte:

   - des premiers moyens de détermination dudit ou desdits groupement,
   - des deuxièmes moyens d'allocation de tout ou partie desdites ressources :

- par affectation d'une ressource à un unique groupement pouvant utiliser ladite ressource pour une ou des communications entre des émetteurs/récepteurs radios dudit groupement ; ou
- par affectation d'une ressource à un unique premier groupement pouvant utiliser ladite ressource pour la communication entre des émetteurs/récepteurs radios dudit premier groupement et des émetteurs/récepteurs radios appartenant à un ou plusieurs groupements voisins destinataires, si aucune des autres ressources partageant le même créneau temporel avec ladite ressource n'est déterminée comme appartenant à un desdits groupements destinataires, ou à un deuxième groupement, pour des liaisons vers un desdits groupements destinataires du premier groupement, sauf si le premier groupement et le deuxième groupement n'ont aucun émetteur/récepteur ayant un voisin radio commun dans les groupements destinataires

- des troisièmes moyens d'allocation, pour tout ou partie des groupements, de tout ou partie des ressources allouées audit groupement, à un des émetteurs/récepteurs radios du groupement

2. Système selon la revendication 1 dans lequel lesdits deuxièmes moyens sont adaptés entre outre pour;

- initialiser un indice de priorité associé à chacun desdits groupement à partir;

  - du nombre d'émetteurs/récepteurs radios appartenant au groupement
  - du nombre d'émetteurs/récepteurs radios appartenant aux groupements voisins ; et
  - des besoins de ressources nécessaires aux émetteurs/récepteurs radios appartenant au groupement

- affecter une ressource au groupement ayant l'indice de priorité le plus faible et pouvant utiliser ladite ressource pour la communication entre des émetteurs/récepteurs radios dudit groupement,
- affecter une ressource au premier groupement ayant l'indice de priorité le plus faible et pouvant utiliser ladite ressource pour la communication entre des émetteurs/récepteurs radios dudit groupement et des émetteurs/récepteurs radios appartenant à un ou plusieurs groupements destinataires voisins, si aucune des autres ressources partageant le même créneau temporel avec ladite ressource n'est déterminée comme appartenant à un des groupements voisins ou à un autre deuxième groupement pour des liaisons vers un desdits groupements destinataires du premier groupement, sauf éventuellement si ledit premier groupement et ledit deuxième groupement n'ont aucun émetteur/récepteur ayant un voisin radio commun appartenant à l'un des groupements destinataires ; et
- mettre à jour de l'indice de priorité suite à une affectation de ressource

3. Système selon la revendication 1 ou 2 dans lequel ;
lesdits premiers moyens de détermination sont en outre adaptés pour la détermination dudit émetteur/récepteur radio central, ledit système comprenant en outre;

  - des quatrièmes moyens, associés à un groupement, de transmission des ressources nécessaires par tout ou partie des émetteurs/récepteurs radios du groupement, vers l'émetteur/récepteur chef du groupement, de concaténation des ressources nécessaires par l'ensemble des émetteurs/récepteurs radios appartenant au groupement et de transmission des ressources nécessaires concaténées vers l'émetteur/récepteur radio central,
  - des cinquièmes moyens associés à un groupement, de transmission des ressources affectées par les deuxièmes moyens vers l'émetteur/récepteur chef du groupement et de transmission des ressources affectées par les troisièmes moyens vers les émetteurs/récepteurs radios du groupement

4. Système selon l'une des revendications 1 à 3 dans lequel les deuxièmes moyens et/ou les troisièmes moyens sont adaptés pour le partage des créneaux temporels en sous créneaux temporels et l'affectation des sous créneaux temporels à des émetteurs/récepteurs radios pouvant être différents ou des groupements pouvant être différents.

5. Système selon l'une des revendications 1 à 4, comprenant en outre des sixièmes moyens, pour tout ou partie des émetteurs/récepteurs radios et des groupements, de mémorisation d'une autorisation d'utilisation par l'émetteur/récepteur radio ou le groupement de tout ou partie des ressources disponibles ;
et dans lequel lesdits troisièmes moyens sont adaptés en outre pour ne pas affecter une ressource à un émetteur/récepteur radio ou à un groupement si ledit émetteur/récepteur radio ou ledit groupement n'est pas autorisé à utiliser ladite ressource.

6. Procédé d'allocation de ressources de communications, une ressource comprenant un créneau temporel et au moins un canal associé, ledit canal comprenant au moins une fréquence d'émission ou de réception utilisable durant ledit créneau temporel, dans un réseau maillé mobile comprenant:

- un premier ensemble d'émetteurs/récepteurs radios communiquant entre eux par l'intermédiaire de liaisons radios,
- au moins un groupement, comportant un deuxième ensemble d'au moins un émetteur/récepteur radio dudit premier ensemble, ledit deuxième ensemble comprenant un émetteur/récepteur chef dans une relation chef subordonné avec l'ensemble des émetteurs/récepteurs radio
- une émetteur/récepteur radio central du réseau appartenant audit premier ensemble,

ledit procédé étant **caractérisé en ce qu'**il comporte:

- une première étape de détermination du ou desdits groupement
- une deuxième étape d'allocation de tout ou partie desdites ressources :

    - par affectation d'une ressource à un unique groupement pouvant utiliser ladite ressource pour une ou des communications entre des émetteurs/récepteurs radios dudit groupement; ou
    - par affectation d'une ressource à un unique premier groupement pouvant utiliser ladite ressource pour la communication entre des émetteurs/récepteurs radios dudit premier groupement et des émetteurs/récepteurs radios appartenant à un ou plusieurs groupements voisins destinataires, si aucune des autres ressources partageant le même créneau temporel avec ladite ressource n'est déterminée comme appartenant à un desdits groupements destinataires, ou à un deuxième groupement pour des liaisons vers un desdits groupements destinataires du premier groupement, sauf si le premier groupement et le deuxième groupement n'ont aucun émetteur/récepteur ayant un voisin radio commun dans les groupements destinataires

- une troisième étape d'allocation, pour tout ou partie des groupements, de tout ou partie des ressources allouées audit groupement, par l'émetteur/récepteur chef du groupement à un des émetteurs/récepteurs radios du groupement.

**Patentansprüche**

1. System zum Zuweisen von Kommunikationsressourcen, wobei eine Ressource einen Zeitschlitz und wenigstens einen assoziierten Kanal umfasst, wobei der Kanal wenigstens eine Sende- und/oder Empfangsfrequenz umfasst, die während des Zeitschlitzes verwendet werden kann, in einem mobilen Maschennetz, das Folgendes umfasst:

    - einen ersten Satz von Funktransceivern, die über Funkverbindungen miteinander kommunizieren;
    - wenigstens eine Gruppe, die einen zweiten Satz von wenigstens einem Funktransceiver des ersten Satzes umfasst, wobei der zweite Satz einen Master-Transceiver in einer Master-Slave-Beziehung mit dem Satz von Funktransceivern des zweiten Satzes umfasst; und
    - einen zentralen Funktransceiver des zum ersten Satz gehörenden Netzwerks, wobei das System **dadurch gekennzeichnet ist, dass** es Folgendes umfasst:
    - erste Mittel zum Ermitteln der Gruppe oder Gruppen;
    - zweite Mittel zum Zuweisen aller oder eines Teils der Ressourcen:

        - durch Zuweisen einer Ressource zu einer einzigen Gruppe, die die Ressource für Kommunikation(en) zwischen Funktransceivern der Gruppe benutzen kann; oder
        - durch Zuweisen einer Ressource zu einer einzigen ersten Gruppe, die die Ressource für die Kommunikation zwischen Funktransceivern der ersten Gruppe und zu einer oder mehreren benachbarten Zielgruppen gehörenden Funktransceivern benutzen kann, wenn festgestellt wird, dass keine der anderen Ressourcen, die denselben Zeitschlitz mit dieser Ressource benutzt, zu einer der Zielgruppen gehört, oder zu einer zweiten Gruppe für Verbindungen zu einer der Zielgruppen der ersten Gruppe, ausgenommen dann, wenn die erste Gruppe und die zweite Gruppe keinen Transceiver mit einem gemeinsamen Funknachbarn in den Zielgruppen haben;

        - dritte Mittel zum Zuweisen, für alle oder einen Teil der Gruppen, aller oder eines Teils der dieser Gruppe zugeordneten Ressourcen zu einem der Funktransceiver der Gruppe.

2. System nach Anspruch 1, wobei die zweiten Mittel unter anderem für Folgendes ausgelegt ist:

- Initialisieren eines mit jeder der Gruppen assoziierten Prioritätsindexes auf der Basis:

  - der Anzahl von zu dieser Gruppe gehörenden Funktransceivern;
  - der Anzahl von zu Nachbargruppen gehörenden Funktransceivern; und
  - des Bedarfs an Ressourcen, die von den zu dieser Gruppe gehörenden Funktransceivern benötigt werden;

- Zuweisen einer Ressource zu der Gruppe, die den niedrigsten Prioritätsindex hat und die Ressource für die Kommunikation zwischen Funktransceivern der Gruppe benutzen kann;
- Zuweisen einer Ressource zu der ersten Gruppe, die den niedrigsten Prioritätsindex hat und die Ressource für die Kommunikation zwischen Funktransceivern der Gruppe und zu einer oder mehreren benachbarten Zielgruppen gehörenden Funktransceivern benutzen kann, wenn festgestellt wird, dass keine der anderen Ressourcen, die denselben Zeitschlitz nutzt wie diese Ressource, zu einer der Nachbargruppen oder zu einer anderen zweiten Gruppe für Verbindungen zu einer der Zielgruppen der ersten Gruppe gehört, eventuell ausgenommen dann, wenn die erste Gruppe und die zweite Gruppe keinen Transceiver mit einem gemeinsamen Funknachbar haben, der zu einer der Zielgruppen gehört; und
- Aktualisieren des Prioritätsindexes nach einer Ressourcenzuweisung.

3. System nach Anspruch 1 oder 2, wobei:

   die ersten Ermittlungsmittel ferner zum Ermitteln des zentralen Funktransceivers ausgelegt sind, wobei das System ferner Folgendes umfasst:

   - vierte Mittel, assoziiert mit einer Gruppe, zum Senden von Ressourcen, die von allen oder einem Teil der Funktransceiver der Gruppe benötigt werden, zum Master-Transceiver der Gruppe, zum Verketten von Ressourcen, die von allen zu dieser Gruppe gehörenden Funktransceivern benötigt werden, und zum Senden von verketteten benötigten Ressourcen zu dem zentralen Funktransceiver;
   - fünfte Mittel, assoziiert mit einer Gruppe, zum Senden von von den zweiten Mitteln zugewiesenen Ressourcen zum Master-Transceiver dieser Gruppe und zum Senden von von den dritten Mitteln zugewiesenen Ressourcen zu den Funktransceivern dieser Gruppe.

4. System nach einem der Ansprüche 1 bis 3, wobei die zweiten Mittel und/oder die dritten Mittel ausgelegt sind zum Unterteilen von Zeitschlitzen in Sub-Zeitschlitze und zum Zuweisen von Sub-Zeitschlitzen zu Funktransceivern, die unterschiedlich sein können, oder zu Gruppen, die unterschiedlich sein können.

5. System nach einem der Ansprüche 1 bis 4, das ferner sechste Mittel, für alle oder einen Teil der Funktransceiver und Gruppen, zum Speichern einer Berechtigung zur Nutzung aller oder eines Teils der verfügbaren Ressourcen durch den Funktransceiver oder die Gruppe umfasst;
   und wobei die dritten Mittel ferner so ausgelegt sind, dass sie keine Ressource einem Funktransceiver oder einer Gruppe zuweisen, wenn der Funktransceiver oder die Gruppe nicht zum Benutzen der Ressource berechtigt ist.

6. Verfahren zum Zuweisen von Kommunikationsressourcen, wobei eine Ressource einen Zeitschlitz und wenigstens einen assoziierten Kanal umfasst, wobei der Kanal wenigstens eine Sende- oder Empfangsfrequenz umfasst, die während des Zeitschlitzes benutzt werden kann, in einem mobilen Maschennetz, das Folgendes umfasst:

   - einen ersten Satz von Funktransceivern, die über Funkverbindungen miteinander kommunizieren;
   - wenigstens eine Gruppe, die einen zweiten Satz von wenigstens einem Funktransceiver des ersten Satzes umfasst, wobei der zweite Satz einen Master-Transceiver in einer Master-Slave-Beziehung mit dem Satz von Funktransceivern umfasst;
   - einen zentralen Funktransceiver des Netzwerks, der zum ersten Satz gehört, wobei das Verfahren **dadurch gekennzeichnet ist, dass** es Folgendes beinhaltet:
   - einen ersten Schritt des Ermittelns der ein oder mehreren Gruppen;
   - einen zweiten Schritt des Zuweisens aller oder eines Teils der Ressourcen:

     - durch Zuweisen einer Ressource zu einer einzigen Gruppe, die die Ressource für Kommunikation(en) zwischen Funktransceivern der Gruppe benutzen kann; oder
     - durch Zuweisen einer Ressource zu einer einzigen ersten Gruppe, die die Ressource für die Kommunikation zwischen Funktransceivern der ersten Gruppe und zu einer oder mehreren benachbarten Zielgruppen gehörenden Funktransceivern benutzen kann, wenn festgestellt wird, dass keine der anderen Ressourcen, die denselben Zeitschlitz benutzen wie diese Ressource, zu einer der Zielgruppen gehört, oder zu einer zweiten Gruppe für Verbindungen zu einer der Zielgruppen der ersten Gruppe, ausgenommen dann, wenn die erste Gruppe und die zweite Gruppe keinen Transceiver mit einem gemeinsamen Funknachbar in den Zielgruppen haben;

- einen dritten Schritt des Zuweisens, für alle oder einen Teil der Gruppen, der dieser Gruppe vom Master-Transceiver der Gruppe zugewiesenen Ressourcen zu einem der Funktransceiver der Gruppe.

## Claims

1. A system for allocating communication resources, with a resource comprising a time slot and at least one associated channel, said channel comprising at least one transmission and/or reception frequency that can be used during said time slot, in a mobile mesh network comprising:

   - a first set of radio transceivers communicating with each other via radio links;
   - at least one group comprising a second set of at least one radio transceiver of said first set, said second set comprising a master transceiver in a master-slave relationship with all of the radio transceivers of said second set; and
   - a central radio transceiver of said network belonging to said first set,

   said system being **characterised in that** it comprises:

   - first means for determining said group or said groups;
   - second means for allocating all or part of said resources:

     - by allocating a resource to a single group that can use said resource for one or more communication(s) between radio transceivers of said group; or
     - by allocating a resource to a single first group that can use said resource to communicate between radio transceivers of said first group and radio transceivers belonging to one or more neighbouring target group(s), if none of the other resources sharing the same time slot with said resource is determined as belonging to one of said target groups, or to a second group for links to one of said target groups of said first group, except if said first group and said second group do not have any transceivers with a common radio neighbour in the target groups;

   - third means for allocating, for all or part of the groups, all or part of the resources allocated to said group to one of the radio transceivers of said group.

2. The system according to claim 1, wherein said second means are adapted, among other things, for:

   - initialising a priority index associated with each of said groups on the basis of:

     - the number of radio transceivers belonging to said group;
     - the number of radio transceivers belonging to neighbouring groups; and
     - the required resources needed by the radio transceivers belonging to said group;

   - allocating a resource to the group that has the lowest priority index and that can use said resource to communicate between radio transceivers of said group;
   - allocating a resource to the first group that has the lowest priority index and that can use said resource to communicate between radio transceivers of said group and radio transceivers belonging to one or more neighbouring target groups, if none of the other resources sharing the same time slot with said resource is determined as belonging to one of the neighbouring groups or to another second group for links to one of said target groups of said first group, possibly except if said first group and said second group do not have any transceivers with a common radio neighbour belonging to one of the target groups; and
   - updating the priority index following the allocation of a resource.

3. The system according to claim 1 or 2, wherein:

said first determination means are further adapted for determining said central radio transceiver, said system further comprising:

- fourth means, associated with a group, for transmitting resources needed by all or part of the radio transceivers of said group to the master transceiver of said group, for concatenating resources needed by all of the radio transceivers belonging to said group and for transmitting concatenated needed resources to said central radio transceiver;
- fifth means, associated with a group, for transmitting resources allocated by said second means to the master transceiver of said group and for transmitting resources allocated by said third means to the radio transceivers of said group.

4. The system according to any one of claims 1 to 3, wherein said second means and/or said third means are adapted to divide time slots into sub-time slots and to allocate sub-time slots to radio transceivers or different groups that can be different.

5. The system according to any one of claims 1 to 4, further comprising sixth means, for all or part of the radio transceivers and groups, for storing an authorisation for the radio transceiver or the group to use all or part of the available resources;
and wherein said third means are further adapted so as not to allocate a resource to a radio transceiver or to a group if said radio transceiver or said group is not authorised to use said resource.

6. A method for allocating communication resources, with a resource comprising a time slot and at least one associated channel, said channel comprising at least one transmission or reception frequency that can be used during said time slot, in a mobile mesh network comprising:

- a first set of radio transceivers communicating with each other via radio links;
- at least one group comprising a second set of at least one radio transceiver of said first set, said second set comprising a master transceiver in a master-slave relationship with all of the radio transceivers;
- a central radio transceiver of said network belonging to said first set,
said method being **characterised in that** it comprises:
- a first step of determining said one or more group(s);
- a second step of allocating all or part of said resources:

- by allocating a resource to a single group that can use said resource for one or more communication(s) between radio transceivers of said group; or
- by allocating a resource to a single first group that can use said resource to communicate between radio transceivers of said first group and radio transceivers belonging to one or more neighbouring target groups, if none of the other resources sharing the same time slot with said resource is determined as belonging to one of said target groups, or to a second group for links to one of said target groups of said first group, except if said first group and said second group do not have any transceivers with a common radio neighbour in the target groups;

- a third step of allocating, for all or part of the groups, all or part of the resources allocated to said group by the master transceiver of said group to one of the radio transceivers of said group.

Créneau temporel

| | 0 | 1 | 2 | 3 | 4 | 5 | 6 | 7 | 8 | 9 |
|---|---|---|---|---|---|---|---|---|---|---|
| 0 | R | R | R | R | R | R | R | R | R | R |
| 1 | R | R | R | R | R | R | R | R | R | R |
| 2 | R | R | R | R | R | R | R | R | R | R |
| 3 | R | R | R | R | R | R | R | R | R | R |

Canaux

| R | Ressource |

## FIG.1

Groupement A

Groupement B

| CH | ER Chef |

| CM | ER subordonné |

Connectivité radio

| | ER Station centrale |

## FIG.2

Voisinage de groupement : Condition 1

Voisinage de groupement : Condition 2

## FIG.3

## FIG.4

Communication intra

Communication inter point à point

Communication inter broadcast

Communication broadcast

FIG.5

EP 2 815 624 B1

101

Détermination
groupements

102

Allocation inter
groupements

102

Allocation intra
groupements

FIG.6

Groupement
C

Groupement
D

Groupement
A

Groupement
B

FIG.8

```
┌─────────────────────────┐          ┌─────────────────────────┐
│ Prérequis :             │          │    Election de          │
│ - Découverte de la      │════╗     │ l'émetteur-récepteur    │
│   topologie             │    ╠════▶│    central :            │
│ - Mise en groupement des│════╝     │   Algorithme MNEP       │
│   émetteurs-récepteurs  │          │                         │
└─────────────────────────┘          └─────────────────────────┘
                                                 │
                                     ┌─────────────────────────┐
                                     │  Remontée des besoins   │
                                     │   des groupements vers  │
                                     │ l'émetteur-récepteur    │
                                     │        central          │
                                     └─────────────────────────┘
                                                 │
                                     ┌─────────────────────────┐
                  Boucle lente  ⟲────│ Algorithme d'allocation │
                                     │ central                 │
                                     │ Répartition des         │
                                     │ resources aux           │
                                     │ différents groupements  │
                                     └─────────────────────────┘
                                                 │
                                     ┌─────────────────────────┐
                                     │ Redescente du résultat  │
                                     │ de l'allocation central │
                                     │ aux chefs de groupement │
                                     └─────────────────────────┘
                                                 │
                                     ┌─────────────────────────┐
                  Boucle rapide ⟲────│ Allocation à l'intérieur│
                                     │ de chaque groupement par│
                                     │ chaque chef de          │
                                     │ groupement              │
                                     └─────────────────────────┘
                                                 │
                                     ┌─────────────────────────┐
                                     │ Redescente du résultat  │
                                     │ de l'allocation des     │
                                     │ chefs de groupement aux │
                                     │ membres                 │
                                     └─────────────────────────┘
```

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. GERLA.** J. T.-C. Tsai ayant pour titre Mutlicluster, mobile, multimedia radio network. *Journal of Wireless Networks,* Juillet 1995, vol. 1 (3), 255-265
- **CHIANG, H. WU ; W. LIU ; M. GERLA.** Routing in clustered multihop, mobile wireless networks with fading channel. *ICCS/ISPACS'96,* Novembre 1996

- **FABIEN ESMIOL et al.** *Distributed Multi-Level Coopérative Scheme for QoS Support in Public Safety Networks*